(19) Europäisches Patentamt / European Patent Office / Office européen des brevets

(11) **EP 4 435 907 A1**

(12) **EUROPEAN PATENT APPLICATION**
published in accordance with Art. 153(4) EPC

(43) Date of publication:
**25.09.2024 Bulletin 2024/39**

(21) Application number: **22907689.8**

(22) Date of filing: **01.11.2022**

(51) International Patent Classification (IPC):
*H01M 8/1048* (2016.01)     *H01M 8/1053* (2016.01)
*H01M 8/1067* (2016.01)     *H01M 8/1004* (2016.01)

(52) Cooperative Patent Classification (CPC):
**H01M 8/1004; H01M 8/1048; H01M 8/1053;**
**H01M 8/1067;** Y02E 60/50; Y02P 70/50

(86) International application number:
**PCT/KR2022/016864**

(87) International publication number:
**WO 2023/113218 (22.06.2023 Gazette 2023/25)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **15.12.2021 KR 20210179455**

(71) Applicant: **Kolon Industries, Inc.**
**Seoul 07793 (KR)**

(72) Inventors:
• **YUN, Sung Hyun**
  **Seoul 07793 (KR)**
• **PARK, Jung Hwa**
  **Seoul 07793 (KR)**
• **LEE, Dong Hoon**
  **Seoul 07793 (KR)**
• **SONG, Kum Suck**
  **Seoul 07793 (KR)**
• **LEE, Hye Song**
  **Seoul 07793 (KR)**

(74) Representative: **Ter Meer Steinmeister & Partner**
**Patentanwälte mbB**
**Nymphenburger Straße 4**
**80335 München (DE)**

(54) **POLYMER ELECTROLYTE MEMBRANE, METHOD FOR MANUFACTURING SAME, AND MEMBRANE-ELECTRODE ASSEMBLY COMPRISING SAME**

(57)     The present disclosure relates to a polymer electrolyte membrane comprising an ion conductor, wherein the ion conductor includes a cation conductive group and an anion conductive group, a method for manufacturing same, and a membrane-electrode assembly comprising same.

[FIG. 1]

existing                    the present disclosure

EP 4 435 907 A1

**Description**

**[TECHNICAL FIELD]**

The present disclosure, furtherance from a polymer electrolyte membrane prepared by controlling the arrangement of ion conductors using an existing electric field, relates to a polymer electrolyte membrane in which the diameter of an ion channel is controlled through the control of the arrangement of the ion conductors by the electrostatic attraction of the ion conductors and the electric field, a preparation method thereof, and a membrane-electrode assembly including the same.

**[BACKGROUND ART]**

A fuel cell is a cell that directly converts chemical energy generated by oxidation of a fuel into electrical energy, and has been highlighted as a next-generation energy source due to its high energy efficiency and low emission of pollutants.

A fuel cell generally has a structure in which an anode and a cathode are formed on both sides of an electrolyte membrane interposed therebetween, and such a structure is referred to as a membrane-electrode assembly (MEA).

Fuel cells can be classified into alkaline electrolyte fuel cells, polymer electrolyte membrane fuel cells (PEMFC), *etc.,* depending on the type of electrolyte membrane, and among them, the polymer electrolyte membrane fuel cells, due to advantages, such as a low operating temperature of below 100°C, fast start-up and response characteristics, excellent durability, *etc.,* has been highlighted as a power supply for portables, vehicles, and household.

Representative examples of such polymer electrolyte fuel cell may include a proton exchange membrane fuel cell (PEMFC) that uses hydrogen gas as fuel, *etc.*

Summarizing the reactions occurring in the polymer electrolyte membrane fuel cell, first, when a fuel such as hydrogen gas is supplied to an oxidizing electrode, hydrogen ions ($H^+$) and electrons ($e^-$) are generated by the oxidation reaction of hydrogen at the oxidizing electrode. The hydrogen ions generated are transferred to a reducing electrode through the ion exchange membrane, and the electrons generated are transferred to the reducing electrode through an external circuit. Oxygen gas is supplied from the reducing electrode, and oxygen is combined with hydrogen ions ($H^+$) and electrons ($e^-$) to generate water by a reduction reaction of oxygen.

Since the polymer electrolyte membrane is a passage through which hydrogen ions ($H^+$) generated at the oxidizing electrode are transferred to the reducing electrode, basically, the conductivity of hydrogen ions ($H^+$) must be excellent. Additionally, the polymer electrolyte membrane must have excellent separation ability for separating hydrogen gas supplied to the oxidizing electrode and oxygen supplied to the reducing electrode, and in addition, it must have characteristics such as excellent mechanical strength, dimensional stability, chemical resistance, low resistance loss (ohmic loss) at high current density, *etc.*

The conditions required for a polymer electrolyte membrane for the operation of the polymer electrolyte fuel cell include high hydrogen ion conductivity, chemical stability, low fuel permeability, high mechanical strength, low moisture content, excellent dimensional stability, *etc.*

A polymer electrolyte membrane includes ionomers having ion conductivity, and the ionomers have high ion conductivity even in the absence of or with very little water. Specifically, ionomers consist of a polymer chain and has ion conductive groups on a side chain connected to the main chain. The ionic conductive groups take an ionic property, such as a cation or anion, and unlike the main chain, the ion conductive groups taking an ionic property are hydrophilic, and thus form a cluster in which the hydrophilic regions are aggregated with one another.

In the cluster, the ion conductive groups are aggregated and the main chain is located relatively outside the cluster, and ion channels in the form of a channel are formed by this natural phenomenon.

Cations (*e.g.*, hydrogen ions, *etc.*) or anions (*e.g.*, ammonium ions, *etc.*) move through the inside of the ion channels. The environment inside the ion channels, the diameter of the ion channels, *etc.* affect the selective conductivity of ions passing through the same.

Korean Patent Application Publication No. 2004-0092332 and Korean Patent Application Publication No. 2008-0019284, which are prior art applications, disclose a technique for improving ionic conductivity using an electric field.

However, these prior literatures merely disclose a technology using an ionomer having only a cation conductive group or anion conductive group, and do not make a disclosure anything relating to a polymer electrolyte membrane, which includes a cation conductive group and an anion conductive group at the same time, and thus, it is prepared by applying an electric field so as to form a regular electrostatic attraction between them.

Therefore, in order to further improve the selective conductivity of ions of the polymer electrolyte membrane, it is necessary to conduct studies on a polymer electrolyte membrane capable of controlling ion channels and improving ion selectivity according to the type of ion conductive functional groups and the arrangement by electric field, and a method for preparing the same.

[Prior Art Document]

[Patent Document 001] Korean Patent Application Publication No. 2004-0092332
[Patent Document 002] Korean Patent Application Publication No. 2008-0019284

[DETAILED DESCRIPTION OF INVENTION]

[TECHNICAL PROBLEMS]

An object of the present disclosure is to provide a polymer electrolyte membrane capable of controlling ion selectivity by the arrangement of ion channels by exposing the same to an electric field during the preparation process of the polymer electrolyte membrane and a method for preparing the same.

An object of the present disclosure is to provide a polymer electrolyte membrane, in which while it is easy to induce the arrangement of ion channels by an electrostatic electric field applied from the outside along with the attraction of the cation functional groups and the anion functional groups in a situation where the cation conductive groups and the anion conductive groups coexist in the ionomers, the polymer electrolyte membrane has good or improved ion selectivity of the ion exchange membrane.

[TECHNICAL SOLUTION]

According to an aspect of the present disclosure, there may be provided a polymer electrolyte membrane including an ion conductor, wherein the ion conductor includes a cation conductive group and an anion conductive group.

The cation conductive group may be any one selected from the group consisting of a sulfonic acid group, a carboxyl group, a boronic acid group, a phosphoric acid group, an imide group, a sulfonimide group, a sulfonamide group, a sulfonic acid fluoride group, and a combination thereof.

The anionic conductive group may be any one selected from the group consisting of an ammonium group, an amine group, and a polymer doped with a metal hydroxide, and a combination thereof.

The ion conductor may include two or more of the cation conductive groups and the anion conductive groups, respectively, in the same main chain or in a different main chain, and the cation conductive groups may each independently be adjacent to 1 or less anion conductive group.

In the cation conductive group, two or more cation conductive groups may form a block being adjacent to each other.

The ion conductor may include a first ion conductor including: a first block, in which two or more first cation conductive groups are adjacent to each other, and a second block, in which two or more first anion conductive groups are adjacent to each other; and a second ion conductor including: a third block, in which two or more second cation conductive groups are adjacent to each other, and a fourth block, in which two or more second anion conductive groups are adjacent to each other, wherein the first block is located to be adjacent to the fourth block, and the second block is located to be adjacent to the third block.

The polymer electrolyte membrane may include ion channels in which the ion conductor is formed in a thickness direction by an external electric field, and the electrolyte membrane, in which the ion channel orientation of the ion conductor is included in the thickness direction, may have ion selectivity of 0.98 to 0.99.

According to another aspect of the present disclosure, there may be provided a method which includes: (i) coating a dispersion of an ion conductor on a substrate or the substrate is impregnated into the dispersion of an ion conductor; (ii) drying the substrate to prepare a polymer electrolyte membrane; (iii) applying an electric field to the substrate; and (iv) separating the dried polymer electrolyte membrane from the substrate, wherein the step (iii) of applying an electric field is performed during the step (i), after the step (i), or after the step (ii).

The ion conductor dispersion may be a dispersion of a polymer including a cation conductive group and an anion conductive group, or a dispersion in which a polymer including a cation conductive group and a polymer containing an anion conductive group are mixed.

The electric field may be one in which an electric field of 5 V/cm to 50 V/cm is applied.

The polymer electrolyte membrane before applying the electric field may have an ion selectivity of 0.90 to 0.96 in a state where an ion conductor is generally formed, and the polymer electrolyte membrane after applying the electric field may have an ion selectivity of 0.98 to 0.99 due to the interaction of the ion channels oriented in the thickness direction and cation exchange functional groups and anion exchange functional groups.

According to still another aspect of the present disclosure, there may be provided a membrane-electrode assembly including the polymer electrolyte membrane described above, wherein the membrane-electrode assembly includes an anode electrode and a cathode electrode disposed opposite to each other, and a polymer electrolyte membrane interposed between the anode electrode and the cathode electrode.

According to still another aspect of the present disclosure, there may be provided a fuel cell including the membrane-electrode assembly including the polymer electrolyte membrane described above.

**[EFFECT OF INVENTION]**

The polymer electrolyte membrane according to the present disclosure has the effect of controlling ion selectivity by inducing the arrangement of ion channels by exposing the same to an electric field.

The polymer electrolyte membrane according to the present disclosure has an advantage in that it can induce the arrangement of ion channels in the thickness direction, thereby enabling selective control of ion conductivity, and can induce the arrangement of the ion channels in the thickness direction by the electrostatic strength applied from the outside while allowing a mutual attraction between functional groups of different polarities at the same time by mixing some of the anion exchange functional groups in the cation exchange membrane, thereby being able to optimize the polymer structure exhibiting optimal ion selectivity and optimize the preparation method.

An object of the method for preparing a polymer electrolyte membrane according to the present disclosure is to provide a polymer electrolyte membrane having good or improved ion selectivity.

**[BRIEF DESCRIPTION OF THE DRAWING]**

FIG. 1 is a schematic diagram showing the interaction between ion conductive groups and arrangement by static electricity in ion channels inside a polymer electrolyte membrane according to the present disclosure.

FIG. 2 is a vertical cross-sectional view of a membrane-electrode assembly including a polymer electrolyte membrane according to the present disclosure.

FIG. 3 is a schematic diagram showing the overall configuration of a fuel cell according to an embodiment of the present disclosure.

**[BEST MODE FOR CARRYING OUT THE INVENTION]**

Hereinafter, each constitution of the present disclosure will be described in more detail so that those skilled in the art can easily practice the same, but this is only one embodiment, and the scope of the present disclosure is not limited by the following description.

"Preferred" or "preferably" as used herein refers to embodiments of the present disclosure that have particular advantages under particular conditions. However, other embodiments may also be preferred under the same or different conditions. Additionally, the presence of one or more preferred embodiments does not imply that other embodiments are not useful, nor does it exclude other embodiments from being within the scope of the present disclosure.

As used herein, the term "comprising" is used when listing materials, compositions, devices, and methods useful in the present disclosure and is not limited to the embodiments listed.

The polymer electrolyte membrane according to the present disclosure includes an ion conductor including a cation conductive group and an anion conductive group in the same main chain or mutually-different main chains.

Common ion conductors may each independently be a cation conductor having a cation exchange group such as proton, or an anion conductor having an anion exchange group such as hydroxy ion, carbonate, or bicarbonate.

That is, conventional ion conductors are configured to have ion conductivity for either cations or anions, and in order to have these characteristics, they been classified as a cation conductor having a cation exchange group (conductive group) (e.g., a sulfonic acid group, a carboxyl group, a hydroxy group, a sulfone group, a phosphoric acid group, *etc.)* having an anionic property in the ion conductor or an anion conductor having an anion exchange group (conductive group) (e.g., an ammonium group, an amine group, and a phosphate group) having a cationic property.

Unlike these conventional ion conductors, the present disclosure is characterized by including a hybrid type ion conductor that includes both a cation conductive group and an anion conductive group in one main chain or in mutually-different main chains.

As described above, the cation conductive group according to the present disclosure may be any one selected from the group consisting of a sulfonic acid group, a carboxyl group, a boronic acid group, a phosphoric acid group, an imide group, a sulfonimide group, a sulfonamide group, a sulfonic acid fluoride group, and a combination thereof. Preferably, it may include a sulfonic acid group, and it is also possible to further include another cation conductive group at the same time while including a sulfonic acid group.

The anionic conductive group may be any one selected from the group consisting of an ammonium group, an

4

amine group, a polymer doped with a metal hydroxide, and a combination thereof. Specifically, in the polymer doped with the metal hydroxide, the polymer may be any one selected from the group consisting of poly(ethersulfone), polystyrene, a vinyl-based polymer, poly(vinyl chloride), poly(vinylidene fluoride), poly(tetrafluoroethylene), poly(benzimidazole), or poly(ethylene glycol).

Common cation conductors may include fluorine-based polymers including the cation exchange group and including fluorine in the main chain; hydrocarbon-based polymers (e.g., benzimidazole, polyamide, polyamideimide, polyimide, polyacetal, polyethylene, polypropylene, acrylic resin, polyester, polysulfone, polyether, polyetherimide, polyester, polyethersulfone, polyetherimide, polycarbonate, polystyrene, polyphenylene sulfide, polyether ether ketone, polyether ketone, polyaryl ether sulfone, polyphosphazene, polyphenylquinoxaline, etc.); partially fluorinated polymers (e.g., a polystyrene-graft-ethylenetetrafluoroethylene copolymer, a polystyrene-graft-polytetrafluoroethylene copolymers, etc.); a sulfone imide, etc.

More specifically, in the case of a hydrogen ion cation conductor, the polymers may include a cation exchange group selected from the group consisting of a sulfonic acid group, a carboxylic acid group, a phosphoric acid group, a phosphonic acid group, and derivatives thereof in their side chains, and specific examples may include a fluorine-based polymer (e.g., poly(perfluorosulfonic acid), poly(perfluorocarboxylic acid), a copolymer of tetrafluoroethylene containing a sulfonic acid group and fluorovinyl ether, defluorinated sulfurized polyether ketone, and a mixture thereof); a hydrocarbon-based polymer (e.g., sulfonated polyimide (S-PI), sulfonated polyarylethersulfone (S-PAES), sulfonated polyetheretherketone (S-PEEK), sulfonated polybenzimidazole (S-PBI), sulfonated polysulfone (S-PSU), sulfonated polystyrene (S-PS), sulfonated polyphosphazene, sulfonated polyquinoxaline, sulfonated polyketone, sulfonated polyphenylene oxide, sulfonated polyether sulfone, sulfonated polyether ketone, sulfonated polyphenylene sulfone, sulfonated polyphenylene sulfide, sulfonated polyphenylene sulfide sulfone, sulfonated polyphenylene sulfide sulfone nitrile, sulfonated polyarylene ether, sulfonated polyarylene ether nitrile, sulfonated polyarylene ether ether nitrile, sulfonated polyarylene ether sulfone ketone, and a mixture thereof), but are not limited thereto.

In the present disclosure, an additional anion conductive group may be further included in a portion of the cation conductor, or a cation conductive group may be partially modified and introduced as an anion conductive group through an additional reaction.

A common anion conductor is a polymer capable of transporting anions such as hydroxy ions, carbonates, or bicarbonates. Anion conductors are commercially available in the form of hydroxide or halide (usually chloride), and the anion conductors may be used is an industrial water purification, metal separation, or catalytic processes.

As the anion conductor, an ammonium group, an amine group, or a polymer doped with a metal hydroxide may be used, and specifically, metal hydroxide-doped poly(ethersulfone), polystyrene, vinyl-based polymers, poly(vinyl chloride), poly(vinylidene fluoride), poly(tetrafluoroethylene), poly(benzimidazole), poly(ethylene glycol), etc. may be used.

In the present disclosure, an additional cation conductive group may be further included in a portion of the anion conductor, or an anion conductive group may be partially modified and introduced as a cation conductive group through an additional reaction.

Alternatively, in the present disclosure, the ion conductor may be a mixture of a cation conductor and an anion conductor.

Among the ion conductors, a fluorine-based polymer may be used. The fluorine-based polymer may be, for example, one which has a perfluorosulfonic acid (PFSA)-based polymer or a perfluorocarboxylic acid (PFCA)-based polymer as the main, in which some sulfonic acid groups are substituted with anion conductive groups.

Specifically, the ion conductor may include two or more of the cation conductive groups and the anion conductive groups, respectively, in the same or mutually-different main chains, and the cation conductive group may be adjacent to one or less anion conductive group.

That is, since the cation conductive group is adjacent to one or 0 anion conductive groups in the ion conductor according to the present disclosure, it may be configured to be adjacent to only a cation conductive group, or may be disposed in a form where an anion conductive group is adjacent to only one side.

For example, when there are two cation conductive groups and two anion conductive groups, the two cation conductive groups may be located adjacent to each other, and one anion conductive group may be located at both ends of the two adjacent cation conductive groups, or may be located next to a cation conductive group in a form where two anion conductive groups are adjacent to each other at one end thereof.

More specifically, the cation conductive groups may be configured to have one continuous arrangement adjacent to one another in a block form, and likewise, the anion conductive groups may also be configured in a block form having one continuous arrangement adjacent to one another.

As described above, the ion conductor, while including each of a cation conductor block and an anion conductor block in a block form, may be configured such that the blocks are spaced apart at regular intervals or each block may be located in mutually-different ion conductors, and thus that the blocks with mutually-different polarities may be disposed to be adjacent due to electrostatic attraction.

For example, the ion conductor may be configured such that the ion conductor includes a first ion conductor including: a first block, in which two or more first cation conductive groups are adjacent to each other, and a second block, in which two or more first anion conductive groups are adjacent to each other; and a second ion conductor including: a third block, in which two or more second cation conductive groups are adjacent to each other, and a fourth block, in which two or more second anion conductive groups are adjacent to each other, wherein the first block is located to be adjacent to the fourth block, and the second block is located to be adjacent to the third block.

Since each block has a mutually-different polarity, the blocks may be located adjacent to each other by electrostatic attraction, and the distance spaced between adjacent blocks may vary according to the absolute size and relative size of adjacent blocks.

As the blocks of mutually-different polarities each increase from the aspect of the absolute size, the distance (*i.e.,* the diameters of the ion channels) decreases, and the bending or shape of the ion channels may vary depending on the relative size of the blocks of mutually-different polarities.

Although the relationship between the first block to the fourth block has been described for better understanding, the blocks of the ion conductive groups constituting the polymer electrolyte membrane according to the present disclosure are not limited thereto and may be configured in more and diverse forms.

In particular, the present disclosure, while ion channels are formed using the ion conductor, may undergo an additional step in which an electric field is applied in the film forming step of the polymer electrolyte membrane to adjust the orientation by an external electric field together with the attraction of the anion conductive groups and the cation conductive groups, thereby making it easier to form the mutual electrostatic attraction.

In the step of applying the electric field, the ion conductive groups are oriented differently by coating an ion conductor dispersion on a substrate or applying an electric field in the thickness direction in a state where the ion conductor dispersion is impregnated into a porous support; and the ion selectivity is controlled by the orientation of the ion channels through interactions, such as an electrostatic interaction during the process of varying the orientation allows mutually-different polarities to be maintained to be adjacent to each other, or an interaction of ion conductive blocks with stronger polarities located in the same ion conductor, which prevents the ion conductive groups from being maintained to be adjacent to one another but being separated from one another, or the like.

The ion selectivity of the polymer electrolyte membrane according to the present disclosure, to which an electric field has been applied as described above, may be 0.98 to 0.99.

Meanwhile, as in general polymer electrolyte membranes, the polymer electrolyte membrane according to the present disclosure may be in any form, for example, a single membrane formed by casting an ion conductor having ion conductivity into a mold, and a reinforced composite material prepared by impregnating a porous support in a dispersion in which the ion conductor is dispersed.

In the case of the reinforced composite membrane, ion selectivity can be adjusted by controlling the orientation of the ion channels using the above-described ion conductor with respect to the ion channels being formed inside the porous support.

The reinforced composite membrane, by including a porous support and the ion conductors filled into the pores of the porous support, has the advantages in that it has improved dimensional stability and physical and mechanical properties, and prevents deterioration of battery performance even when the resistance of the polymer electrolyte membrane itself may increase slightly, thereby capable of excellently maintaining the performance and lifetime of the fuel cell itself.

The porous support constituting the reinforced composite membrane generally consists of a polymer material, such as a perfluorinated polymer sheet having a plurality of pores due to the microstructure of polymer fibrils, or a form including a nanoweb in which nanofibers are integrated in the form of a nonwoven fabric including a plurality of pores, *etc.*

The porous support consists of an aggregate of three-dimensionally irregular and discontinuously connected nanofibers, and thus, includes a plurality of uniformly distributed pores. The porous support consisting of a plurality of uniformly distributed pores has excellent porosity and properties capable of complementing physical properties of ion conductors (dimensional stability, *etc.).*

The pore diameter, which is the diameter of the pores formed in the porous support, may be formed in the range of 0.05 μm to 30 μm. When the pore diameter is formed to be less than 0.05 μm, the ion conductivity of the polymer electrolyte may decrease, whereas when the thickness exceeds 30 μm, the mechanical strength of the polymer electrolyte may decrease.

In addition, the porosity representing the degree of formation of pores of the porous support may be formed within a range of 50% to 98%.

When the porosity of the porous support is less than 50%, the ionic conductivity of the polymer electrolyte may decrease, whereas when the porosity exceeds 98%, the mechanical strength and form stability of the polymer electrolyte may decrease.

The porosity (%) can be calculated by the ratio of the air volume to the total volume of the porous support, as shown in Equation 1 below.

[Equation 1]

$$\text{porosity (\%)} = (\text{air volume/total volume}) \times 100$$

In particular, the total volume of the porous support is calculated by preparing a sample of a rectangular shaped porous support and measuring its width, length, and thickness, and the air volume of the porous support may be obtained by subtracting the polymer volume, which is inversely calculated from the density after measuring the mass of the porous support sample, from the total volume of the porous support.

The average diameter of the nanofibers constituting the porous support may be in the range of 0.005 $\mu$m to 5 $\mu$m. When the average diameter of the nanofibers is less than 0.005 $\mu$m, mechanical strength of the porous support may decrease, whereas when the average diameter of the nanofibers exceeds 5 $\mu$m, it may not be easy to control the porosity of the porous support.

The porous support may be any one selected from the group consisting of nylon, polyimide, polybenzoxazole, polyethylene terephthalate, polyethylene, polypropylene, polytetrafluoroethylene, polyarylene ether sulfone, polyether ether ketone, copolymers thereof, and a combination thereof, but the present disclosure is not limited thereto.

The porous support may be formed to a thickness of 5 $\mu$m to 30 $\mu$m. When the thickness of the porous support is less than 5 $\mu$m, mechanical strength and form stability of the polymer electrolyte may deteriorate, whereas when the thickness of the porous support exceeds 30 $\mu$m, resistance loss of the polymer electrolyte may increase.

Meanwhile, the method for preparing a polymer electrolyte membrane according to the present disclosure includes (i) dispersing an ion conductor in a dispersion and then coating the ion conductor onto a substrate or the substrate is impregnated into the dispersion of an ion conductor; (ii) drying the substrate to prepare a polymer electrolyte membrane; (iii) applying an electric field to the substrate; (iv) separating the dried polymer electrolyte membrane from the substrate; and (v) heat-treating the polymer electrolyte membrane before/after the separation step, wherein the step of (iii) applying the electric field may be performed during the step (i) or after the step (i) or after the step (ii). For example, the electric field of the step (iii) may be performed after the step (i) of coating the ion conductor dispersion onto the substrate, or in the state where the substrate is impregnated into the (i) ion conductor dispersion, that is, during the step (i). In particular, the electric field is applied in the thickness direction of the substrate.

As described above, the ion conductor is a hybrid type ion conductor which includes both a cation conductive group and an anion conductive group in the same main chain or mutually-different main chains, and details thereof can be referred to those described above.

In the step of applying an electric field, the electric field in the range of 5 V/cm to 50 V/cm may be applied for 5 minutes to 24 hours.

When a current lower than the electric field is applied, there may be a problem in that the ion channels may not be aligned, whereas when a current higher than the above current is applied, there may be a problem in that the solvent is electrolyzed and decomposed into byproducts.

In addition, when the electric field is applied for a time shorter than the above time, there is a problem in that there is almost no change in the orientation of the ion channels, whereas when the electric field is applied for a time longer than the above time, there is a problem in that it reaches a section where there is no further change after the diameter of the ion channel has undergone a sufficient change thereby causing deterioration in preparation efficiency.

By undergoing the step of applying the electric field as described above, the mobility number of the polymer electrolyte membrane (*i.e.*, the ion selectivity of the electrolyte membrane), which was 0.90 to 0.96 before applying the electric field, may change to 0.98 to 0.99 by the orientation of the ion channels after applying the electric field.

Through this process, the prepared polymer electrolyte membrane may be adjusted according to the type of ions passing through the ion channels, and the prepared polymer electrolyte membrane has the advantage in that it can improve fuel cell performance by improving selectivity and hydrogen permeability to be suitable for the environment in which the fuel cell operates by increasing ion selectivity by inducing the orientation of the ion channels in the thickness direction.

Hereinafter, the present disclosure will be described in more detail based on the drawings.

However, this is merely an exemplary embodiment for describing the present disclosure, and the scope of the present disclosure is not limited by the following description.

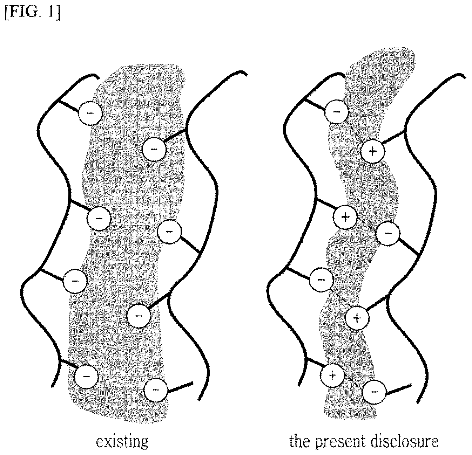

FIG. 1 is a schematic diagram showing the interaction between ion conductive groups and arrangement by static electricity in ion channels inside a polymer electrolyte membrane according to the present disclosure;

Referring to FIG. 1, in a conventional ion channel, ion conductive groups having one polarity are formed as ion channels formed by clustering, and accordingly, the ion selectivity tends to somewhat decrease by mutual repulsive force of the ion conductive groups having the same polarity, despite the orientation in the thickness direction.

When the ion selectivity is low, there is a problem in that hydrogen permeability may be high, and thus, the ion selectivity can be controlled by adjusting the orientation of the ion channels and the mutual attraction between the ion exchange functional groups according to the type of ions.

In the case of the present disclosure illustrated on the right side of FIG. 1, some ion conductive groups are composed of ion conductive groups having different polarities. For this reason, functional groups with different polarities have a smaller ion channel diameter due to electrostatic attraction and the orientation of the ion channel in the thickness direction of the external electric field. As a result, it is possible to induce an effect of improving ion selectivity and hydrogen permeability.

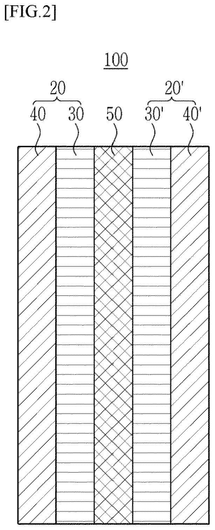

FIG. 2 is a schematic cross-sectional view of a membrane-electrode assembly according to an embodiment of the present disclosure. Referring to FIG. 2, the membrane-electrode assembly 100 includes the polymer electrolyte membrane 50 and the fuel cell electrodes (20, 20') disposed on both surfaces of the polymer electrolyte membrane 50, respectively. The electrodes (20, 20') include electrode substrates (40, 40') and catalyst layers (30, 30') formed on the surfaces of the electrode substrates (40, 40'), and may further include, between the electrode substrates (40, 40') and the catalyst layers (30, 30'), a microporous layer (not shown) containing conductive fine particles (e.g., carbon powder, carbon black, *etc.*) so as to facilitate diffusion of materials in the electrode substrates (40, 40').

In the membrane-electrode assembly 100, the electrode 20, which is disposed on one surface of the polymer electrolyte membrane 50 and causes an oxidation reaction such that hydrogen ions and electrons are generated from the fuel delivered to the catalyst layer 30 through the electrode substrate 40, is called an anode electrode, and the electrode 20', which is disposed on the other side of the polymer electrolyte membrane 50 and causes a reduction reaction that generates water from hydrogen ions supplied through the polymer electrolyte membrane 50 and the oxidizing agent delivered to the catalyst layer 30' through the electrode substrate 40', is called a cathode electrode.

As the electrode substrate (40, 40'), a porous conductive substrate may be used so that hydrogen or oxygen can be smoothly supplied. Representative examples thereof may include carbon paper, carbon cloth, carbon felt, or metal cloth (a porous film consisting of a fibrous metal cloth or a metal film formed on the surface of a cloth formed of polymer fibers), but is not limited thereto. In addition, as the electrode substrates (40, 40'), it is preferable to use those subjected to repellency treatment with a fluorine-based resin so as to prevent the decrease of diffusion efficiency of reactants due to the water generated during the operation of a fuel cell. As the fluorine-based resin include polytetrafluoroethylene, polyvinylidene fluoride, polyhexafluoropropylene, polyperfluoroalkylvinyl ether, polyperfluorosulfonylfluoride alkoxyvinyl ether, fluorinated ethylene propylene, polychlorotrifluoroethylene, or a copolymer thereof may be used.

A fuel cell according to an embodiment of the present disclosure includes the membrane-electrode assembly, and may be, for example, a fuel cell using hydrogen gas as a fuel.

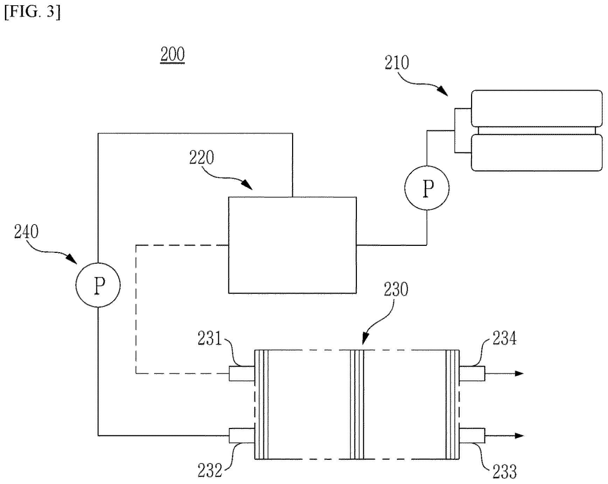

FIG. 3 is a schematic diagram showing the overall configuration of a fuel cell.

Referring to FIG. 3, the fuel cell 200 according to the present disclosure includes a fuel supply unit 210, which supplies a mixed fuel in which fuel and water are mixed; a reforming unit 220, which reforms the mixed fuel to generate reformed gas containing hydrogen gas; a stack 230, in which the reformed gas containing hydrogen gas supplied from the reforming unit 220 causes an electrochemical reaction with an oxidizing agent to generate electrical energy; and an oxidizing agent supply unit 240, which supplies the oxidizing agent to the reforming unit 220 and the stack 230.

The stack 230 is provided with a plurality of unit cells which generate electrical energy by inducing an oxidation/reduction reaction between the reformed gas including hydrogen supplied from the reforming unit 220 and the oxidizing agent supplied from the oxidizing agent supplying unit 240.

Each unit cell, which refers to a unit cell that generates electricity, includes the membrane-electrode assembly for oxidizing/reducing the reformed gas containing hydrogen gas and oxygen in the oxidizing agent, and a separator (also called a bipolar plate, hereinafter referred to as "separator") for supplying a reformed gas containing hydrogen gas and the oxidizing agent to the membrane-electrode assembly. The separators are disposed on both sides of the membrane-electrode assembly with the membrane-electrode assembly placed at the center. In particular, the separators respectively located at the outermost side of the stack are also particularly called end plates.

Among the separators, the end plate is provided with a pipe-shaped first supply pipe 231 for injecting the reformed gas including hydrogen gas supplied from the reforming unit 220; and a pipe-shaped second supply pipe 232 for injecting oxygen gas; and the other end plate is provided with a first discharge pipe 233 for discharging reformed gas containing hydrogen gas, that is finally unreacted and remains in a plurality of unit cells, to the outside; and a second discharge pipe 234 for discharging the oxidizing agent, that is finally unreacted and remains in the unit cell, to the outside.

**[Detailed Description for Carrying Out the Invention]**

Hereinafter, it will be described in more detail based on embodiments of the present disclosure, but these are merely exemplary description for the understanding of the present disclosure, and the scope of the present disclosure is not limited or restricted to the following examples.

**[Example] Preparation of polymer electrolyte membrane**

In order to confirm the effects of the present disclosure, Nafion of EW 1100 g/mequiv. (Dupont, USA) was used as a polymer for the cation exchange membrane, and as a polymer for the anion exchange membrane, a polymer with anion exchange functional groups was synthesized by introducing trimethylamine into a copolymer composite (4-vinylbenzyl chloride (VBC)/divinylbenzene (DVB) copolymer) made by thermal copolymerization of 4-vinylbenzyl chloride and divinylbenzene to introduce quaternary ammonium functional groups. The ion-exchange capacity (IEC) of the Nafion polymer was measured to be 0.9 meq/g to 1.0 meq/g, and the anion exchange capacity of the synthesized anion exchange membrane was measured to be 0.4 meq/g to 0.5 meq/g. The cation exchange polymer and the anion exchange polymer were dispersed in dimethylacetamide (DMAc) solvent, which is an organic solvent, and these polymers were mixed in a 1:0.5 solid weight ratio so that the cation exchange functional group and the anion exchange functional group had an equivalent ratio of 1:0.25, and thereby a solution for preparing an electrolyte membrane was prepared. However, the ion exchange capacity and the mixing ratio are matters for realizing the effects of the present disclosure, and do not limit the range of the ion exchange capacity or the mixing range.

The prepared polymer solution was cast on a glass plate with a size of 10 cm $\times$ 10 cm and a thickness of 3 mm, and stainless metal plates of the same area were placed on top and bottom to maintain a distance of 1 cm, and a DC power supply (max. 60 V, Agilent) was used to induce the orientation of the ion conduction channels using an electric field by applying a constant DC voltage in the thickness direction for 12 hours with the glass plate on which the polymer solution was cast therebetween. Under the same conditions, DC voltages of 0 V, 10V, 20V, 30V, and 40V were applied such that the electric field strength for inducing the orientation of the ion conduction channels in the thickness direction was set to 10V/cm, 20V/cm, 30V/cm, and 40 V/cm, and the thickness of the prepared electrolyte membrane was set to about 20 $\mu$m. All of the dried electrolyte membranes were heat treated at 120° C for 3 hours, and the transport number for ion selectivity and the hydrogen permeability of the MEA were measured to examine the effects of formation of ion conduction channels.

**[Experimental Example 1] Measurement of ion selectivity (ionized water)**

As Comparative Examples of the present disclosure, a Nafion dispersion consisting of only cation exchange functional groups was prepared under the same conditions, and the results are shown in [Table 1]. As Examples, a dispersion, in which a cation exchange Nafion dispersion and an anion exchange polymer dispersion where a quaternary ammonium functional group was introduced into the main chain of a polystyrene polymer mentioned above were mixed in a 1:0.5 solid weight ratio, was used to prepare under the same conditions, and the results are shown in [Table 2].

In order to examine the performance of the ion exchange membrane according to the arrangement and size of the ion conduction channels, the transport number, which is an indicator of ion selectivity, was measured. As for the transport number, 0.01 N NaOH ($C_i$) and 0.05 N NaOH ($C_2$) solutions, and the target electrolyte membrane was inserted into a two-chamber cell with a potential difference due to a difference in chemical concentration, and the Ag/AgCl reference electrode was placed close to the membrane surface on both sides to read the change in the potential difference (Em) and calculate the transport number (T+) by the equation below.

$$E_m = \frac{RT}{F}(1 - 2T_+)\ln\frac{C_1}{C_2}$$

[Table 1]

| | Application of DV voltage | Ion Selectivity (transport number) |
|---|---|---|
| Comparative Example 1 | 0 V/cm | 0.98 |
| Comparative Example 2 | 10 V/cm | 0.98 |
| Comparative Example 3 | 20 V/cm | 0.99 |
| Comparative Example 4 | 30 V/cm | 0.99 |
| Comparative Example 5 | 40 V/cm | 0.97 |

[Table 2]

|  | Application of DV voltage | Ion Selectivity (transport number) |
|---|---|---|
| Example 1 | 0 V/cm | 0.96 |
| Example 2 | 10 V/cm | 0.96 |
| Example 3 | 20 V/cm | 0.99 |
| Example 4 | 30 V/cm | 0.99 |
| Example 5 | 40 V/cm | 0.98 |

Referring to Comparative Examples shown in [Table 1], it can be seen that the ion selectivity was improved from 0.98 to 0.99 up to 30 V/cm while applying a DC voltage to the cation exchange membrane, and this suggests a decrease in size caused by the arrangement of the ion conduction channels. In contrast, referring to [Table 1] and [Table 2], as shown in the ion selectivity results of Comparative Example 1 and Example 1, when the cation exchange polymer and the anion exchange polymer were simply mixed, the selectivity was reduced from 0.98 to 0.96, and thus, the ion conduction channel was enlarged by mixing the crystalline Nafion polyelectrolyte with the amorphous polystyrene-based polyelectrolyte having the anion exchange functional groups, thereby resulting in a decrease in ion selectivity. When an electric field was sequentially applied in a state where the cation exchange functional groups and the anion exchange functional groups were mixed, an excellent ion selectivity of 0.99 was shown at DC voltage intensities of 20 V/cm and 30 V/cm, which is an improvement from 0.96 in the simple mixed state. Therefore, it is suggested that the anion exchange functional groups and the cation exchange functional groups form a mutual attraction in a mixed solution state and have an effect on the orientation of the ion conduction channels.

**[Experimental Example 2] Measurement of hydrogen permeability**

In order to more clearly confirm the orientation effect of the ion channels by the external electric field when the cation exchange functional groups and the anion exchange functional groups of different polarities coexist, MEAs were prepared for Comparative Examples 1 and 4 and Examples 1 and 4, and hydrogen permeability in the unit cell was measured. For hydrogen permeability, a membrane-electrode assembly for a fuel cell having an electrode active area of 10 cm$^2$ including each of the prepared polymer electrolyte membranes was prepared, the temperature was set to 65°C and the RH value was set to 100%, and the hydrogen permeation current density through the polymer electrolyte membrane at 0.2 V was measured by the linear sweep voltammetry (LSV) method using a potentiostat by flowing $H_2$ gas to the anode and $N_2$ gas to the cathode. The results are shown in [Table 3],
[0106]

[Table 3]

|  | Application of DV voltage | Hydrogen Permeation Current Density mA/cm$^2$ |
|---|---|---|
| Comparative Example 1 | 0 V/cm | 3.2 |
| Comparative Example 4 | 30 V/cm | 3.0 |
| Example 1 | 0 V/cm | 3.6 |
| Example 4 | 30 V/cm | 2.8 |

Referring to [Table 3], compared to Comparative Example 1 having only cation exchange functional groups, the hydrogen permeability of Example 1, in which the cation exchange functional groups and an anion exchange functional groups were simply mixed, showed an increase of ion selectivity from 3.2 to 3.6. This is because the ion conduction channel enlarged by the addition of an amorphous polymer electrolyte having anion exchange functional groups. In contrast, comparing the degree of hydrogen permeability between Comparative Example 4 and Example 4 in which the orientation of the ion conduction channels was induced by applying an external electric field in the thickness direction of the membrane, it was confirmed that the degree of hydrogen permeation was decreased from 3.0 to 2.8. It can be confirmed that the effect of orientation of the ion channels in the thickness direction by the external electric field was improved by mixing the cation exchange functional groups and the anion exchange functional groups having different polarities.

**Claims**

1. A polymer electrolyte membrane comprising an ion conductor, wherein the polymer electrolyte membrane comprises a cation conductive group and an anion conductive group.

2. The polymer electrolyte membrane of claim 1, wherein the cation conductive group is any one selected from the group consisting of a sulfonic acid group, a carboxyl group, a boronic acid group, a phosphoric acid group, an imide group, a sulfonimide group, a sulfonamide group, a sulfonic acid fluoride group, and a combination thereof.

3. The polymer electrolyte membrane of claim 1, wherein the anionic conductive group is any one selected from the group consisting of an ammonium group, an amine group, and a polymer doped with a metal hydroxide, and a combination thereof.

4. The polymer electrolyte membrane of claim 1, wherein the ion conductor comprises two or more of the cation conductive groups and the anion conductive groups, respectively, in the same main chain or in a different main chain, and the cation conductive groups are each independently adjacent to 1 or less anion conductive group.

5. The polymer electrolyte membrane of claim 4, wherein in the cation conductive group, two or more cation conductive groups form a block being adjacent to each other.

6. The polymer electrolyte membrane of claim 1, wherein the ion conductor comprises:

   a first ion conductor comprising: a first block, in which two or more first cation conductive groups are adjacent to each other, and a second block, in which two or more first anion conductive groups are adjacent to each other; and a second ion conductor comprising: a third block, in which two or more second cation conductive groups are adjacent to each other, and a fourth block, in which two or more second anion conductive groups are adjacent to each other,
   wherein the first block is located to be adjacent to the fourth block, and the second block is located to be adjacent to the third block.

7. The polymer electrolyte membrane of claim 1, wherein the polymer electrolyte membrane comprises an ion channel in which the ion conductor is formed in a thickness direction by an external electric field, and
   the electrolyte membrane, in which the ion channel orientation of the ion conductor is comprised in the thickness direction, has an ion selectivity of 0.98 to 0.99.

8. A method of preparing the polymer electrolyte membrane of claim 1, comprising:

   (i) coating a dispersion of an ion conductor on a substrate or the substrate is impregnated into the dispersion of an ion conductor;
   (ii) drying the substrate to prepare a polymer electrolyte membrane;
   (iii) applying an electric field to the substrate; and
   (iv) separating the dried polymer electrolyte membrane from the substrate,

   wherein the step (iii) of applying an electric field is performed during the step (i), after the step (i), or after the step (ii).

9. The method of preparing the polymer electrolyte membrane of claim 8, wherein the ion conductor dispersion is a dispersion of a polymer comprising a cation conductive group and an anion conductive group, or a dispersion in which a polymer comprising a cation conductive group and a polymer containing an anion conductive group are mixed.

10. The method of preparing the polymer electrolyte membrane of claim 8, wherein an electric field of 5 V/cm to 50 V/cm is applied.

11. The method of preparing the polymer electrolyte membrane of claim 8, wherein the polymer electrolyte membrane before applying the electric field has an ion selectivity of 0.90 to 0.96 in a state where an ion conductor is generally formed, and
    the polymer electrolyte membrane after applying the electric field has an ion selectivity of 0.98 to 0.99 due to the interaction of the ion channel oriented in the thickness direction and cation exchange functional groups and anion exchange functional groups.

12. A membrane-electrode assembly comprising the polymer electrolyte membrane according to claim 1, wherein the membrane-electrode assembly comprises an anode electrode and a cathode electrode disposed opposite to each other, and a polymer electrolyte membrane interposed between the anode electrode and the cathode electrode.

13. A fuel cell comprising a membrane-electrode assembly comprising the polymer electrolyte membrane according to claim 12.

[FIG. 1]

existing      the present disclosure

[FIG.2]

[FIG. 3]

## INTERNATIONAL SEARCH REPORT

| International application No. |
|---|
| **PCT/KR2022/016864** |

**A.    CLASSIFICATION OF SUBJECT MATTER**

**H01M 8/1048**(2016.01)i; **H01M 8/1053**(2016.01)i; **H01M 8/1067**(2016.01)i; **H01M 8/1004**(2016.01)i

According to International Patent Classification (IPC) or to both national classification and IPC

**B.    FIELDS SEARCHED**

Minimum documentation searched (classification system followed by classification symbols)

H01M 8/1048(2016.01); B01J 39/18(2006.01); C08J 3/28(2006.01); C08J 5/18(2006.01); C08J 5/22(2006.01); H01M 8/10(2006.01); H01M 8/1018(2016.01); H01M 8/1032(2016.01); H01M 8/1088(2016.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 연료전지(fuel cell), 전해질막(electrolyte membrane), 양이온(cation), 음이온 (anion)

**C.    DOCUMENTS CONSIDERED TO BE RELEVANT**

| Category* | Citation of document, with indication, where appropriate, of the relevant passages | Relevant to claim No. |
|---|---|---|
| X<br><br>Y | KR 10-2018-0024268 A (INDUSTRY FOUNDATION OF CHONNAM NATIONAL UNIVERSITY) 08 March 2018 (2018-03-08)<br>See claims 1-3, 7-9, 14 and 15; paragraphs [0046], [0056], [0060] and [0080]; and figure 1. | 1-6,12,13<br><br>7-11 |
| Y | KR 10-2008-0083805 A (LG CHEM, LTD.) 19 September 2008 (2008-09-19)<br>See claims 1 and 12; and paragraph [0021]. | 7-11 |
| A | WO 2007-014081 A2 (EVIONYX, INC. et al.) 01 February 2007 (2007-02-01)<br>See entire document. | 1-13 |
| A | KR 10-2017-0115354 A (SOGANG UNIVERSITY RESEARCH & BUSINESS DEVELOPMENT FOUNDATION) 17 October 2017 (2017-10-17)<br>See entire document. | 1-13 |

☑ Further documents are listed in the continuation of Box C.      ☑ See patent family annex.

| | | |
|---|---|---|
| *     Special categories of cited documents: | "T" | later document published after the international filing date or priority date and not in conflict with the application but cited to understand the principle or theory underlying the invention |
| "A"   document defining the general state of the art which is not considered to be of particular relevance | | |
| "D"   document cited by the applicant in the international application | "X" | document of particular relevance; the claimed invention cannot be considered novel or cannot be considered to involve an inventive step when the document is taken alone |
| "E"   earlier application or patent but published on or after the international filing date | | |
| "L"   document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O"   document referring to an oral disclosure, use, exhibition or other means | | |
| "P"   document published prior to the international filing date but later than the priority date claimed | "&" | document member of the same patent family |

| Date of the actual completion of the international search | Date of mailing of the international search report |
|---|---|
| **21 February 2023** | **22 February 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2022/016864**

| C. | DOCUMENTS CONSIDERED TO BE RELEVANT | |
| --- | --- | --- |
| Category* | Citation of document, with indication, where appropriate, of the relevant passages | Relevant to claim No. |
| A | KR 10-2014-0126199 A (INNOMEDITECH INC.) 30 October 2014 (2014-10-30)<br>See entire document. | 1-13 |

**INTERNATIONAL SEARCH REPORT**
Information on patent family members

| International application No. |
|---|
| **PCT/KR2022/016864** |

| Patent document cited in search report | | | Publication date (day/month/year) | Patent family member(s) | | | Publication date (day/month/year) |
|---|---|---|---|---|---|---|---|
| KR | 10-2018-0024268 | A | 08 March 2018 | KR | 10-1860541 | B1 | 23 May 2018 |
| KR | 10-2008-0083805 | A | 19 September 2008 | KR | 10-0963747 | B1 | 14 June 2010 |
| WO | 2007-014081 | A2 | 01 February 2007 | CN | 101268580 | A | 17 September 2008 |
| | | | | EP | 1920491 | A2 | 14 May 2008 |
| | | | | TW | 200711213 | A | 16 March 2007 |
| | | | | US | 2007-0020501 | A1 | 25 January 2007 |
| | | | | WO | 2007-014081 | A3 | 21 June 2007 |
| KR | 10-2017-0115354 | A | 17 October 2017 | CN | 109121441 | A | 01 January 2019 |
| | | | | CN | 109121441 | B | 22 February 2022 |
| | | | | KR | 10-1931411 | B1 | 20 December 2018 |
| | | | | US | 10797334 | B2 | 06 October 2020 |
| | | | | US | 2019-0123373 | A1 | 25 April 2019 |
| | | | | WO | 2017-175959 | A1 | 12 October 2017 |
| KR | 10-2014-0126199 | A | 30 October 2014 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20040092332

- KR 20080019284